# EUROPEAN PATENT APPLICATION

(11) **EP 3 866 120 A1**
(43) Date of publication of application: **18.08.2021**
(21) Application number: 20157557.8
(22) Date of filing: 17.02.2020
(51) Int. Cl.: G06T 19/00, G06T 11/00, G06T 7/10

(54) **IMAGE SEGMENTATION SYSTEM**

(71) Applicant: Koninklijke Philips N.V., 5656 AG Eindhoven (NL)
(72) Inventor: WEBER, Frank Michael, 5656 AE Eindhoven (NL); PETERS, Jochen, 5656 AE Eindhoven (NL); WEESE, Juergen, 5656 AE Eindhoven (NL)
(74) Representative: Philips Intellectual Property & Standards

(57) **Abstract**

Disclosed herein is a medical system (100, 300) comprising a display (112) and a user interface (114). The execution of machine executable instructions (120) causes a processor (104) to: receive (200) three-dimensional medical image data (122) of an anatomical structure (128, 322); receive (202) a three-dimensional segmentation (124) with one or more reference locations (800); display (204) at least one two-dimensional slice (126) of the three-dimensional medical image data; render (206) a cross section (134) of the three-dimensional segmentation, provide (208) a control element (130) of the user interface that is configured for receiving a one-dimensional position of the at least one reference location along a predetermined one-dimensional path (806); receive (210) the one-dimensional position (137) from the control element; adjust (212) the three-dimensional segmentation (124) using the one-dimensional position; and update (214) the rendering of the cross section of the three-dimensional segmentation.

## Description

### FIELD OF THE INVENTION

The invention relates to three-dimensional medical imaging, in particular to the segmentation of three-dimensional medical images.

### BACKGROUND OF THE INVENTION

In a variety of medical imaging technologies such as Magnetic Resonance Imaging (MRI), Computed Tomography (CT), and three-dimensional ultra sound imaging the three-dimensional image data may be segmented to provide quantitative measurements of anatomical structures.

United States patent application US 2013/0050207 A1 discloses a method for navigating a three-dimensional (3D) image includes accessing a 3D image dataset, generating a 3D mesh corresponding to a 3D segmentation result using the 3D image dataset, and displaying a 3D surface rendering of the 3D image intensities on the 3D mesh.

### SUMMARY OF THE INVENTION

The invention provides for a magnetic resonance imaging system, a computer program product and a method in the independent claims.

A difficulty with three-dimensional segmentation systems is that it may be difficult to adjust the segmentation. A three-dimensional mesh used to represent the segmentation may for example be conveniently visualized in an understandable way on a two-dimensional screen, but it may be difficult to visualize the three-dimensional segmentation and the measured three-dimensional image data simultaneously. A current way of examining the three-dimensional image data and comparing it to the three-dimensional segmentation is to display slices of the three-dimensional image data with cross sections of the three-dimensional segmentation displayed.

The segmentation may have parameters such as reference locations such as points which identify anatomical landmarks such as points or planes of an anatomical structure. Embodiments provide for a means of adjusting the location of the reference locations that are outside of the displayed slices or to move the location of the reference locations outside of the displayed slices. Embodiments provide a control element, such as a slider or dial, that allow the entry of a one-dimensional position of a reference location along a one-dimensional path. A user can manipulate the control element and the rendering of the cross section of the three-dimensional cross section is updated. The one-dimensional path can be defined within a model or within the three-dimensional segmentation. In some cases, the three-dimensional segmentation can function as a model which defines geometric relationships between the three-dimensional segmentation and the reference locations.

In one aspect the invention provides for a medical system that comprises a display and a user interface. The medical system further comprises a memory containing machine-executable instructions. The medical system further comprises a processor configured for controlling the medical system. Execution of the machine-executable instructions causes the processor to receive three-dimensional medical image data descriptive of an anatomical structure. Execution of the machine-executable instructions further causes the processor to receive a three-dimensional segmentation of the anatomical structure. The three-dimensional segmentation may be received from different places. In one example it may be retrieved from the memory.

In another example it may be retrieved from a storage device or from a remote location via a network interface. In yet other examples the three-dimensional segmentation may be received from a user interface. In other examples an automatic segmentation algorithm may provide the three-dimensional segmentation after the three-dimensional medical image data has been received by the processor. The three-dimensional segmentation comprises one or more reference locations. A reference location as used herein is a defined location on the three-dimensional segmentation. This for example may be a significant anatomical landmark or position identified within the three-dimensional segmentation.

Execution of the machine-executable instructions further causes the processor to display at least one two-dimensional slice of the three-dimensional medical image data using the display. The two-dimensional slice of the three-dimensional medical image data may be provided in different ways. In some instances, the three-dimensional medical image data was acquired in slices. In other examples the three-dimensional medical image data may be a full three-dimensional dataset and the two-dimensional slice may be a cross-section of this three-dimensional data.

Execution of the machine-executable instructions further causes the processor to render a cross-section of the three-dimensional segmentation within the at least one two-dimensional slice on the display. The effect of this is that the location of the reference locations can be moved independent of them being within a displayed slice or not.

Execution of the machine-executable instructions further causes the processor to provide a control element of the user interface for the at least one reference location on the user interface. The control element is configured for receiving a one-dimensional position of the at least one reference location along a predetermined one-dimensional path. Execution of the machine-executable instructions further causes the processor to receive the one-dimensional position from the control element.

Execution of the machine-executable instructions further causes the processor to adjust the three-dimensional segmentation using the one-dimensional position. Execution of the machine-executable instructions further causes the processor to update the rendering of the cross-section of the three-dimensional segmentation within the at least one two-dimensional slice on the display.

In this embodiment the control element provides a means to move the position of the at least one reference location. A control element is provided for doing this. However, motion of the at least one reference location is not arbitrary; it is along a predetermined one-dimensional path. This predetermined one-dimensional path may be defined in terms of the three-dimensional segmentation. This is beneficial because it provides a means to adjust important parameters of the three-dimensional segmentation that are not contained in one of the displayed two-dimensional slices. It may be further beneficial because it provides a means to move a reference location out of the displayed two-dimensional slices.

Moving the at least one reference location along the predetermined one-dimensional path also provides a means for adjusting the three-dimensional segmentation in an anatomically meaningful way. It is not simply the arbitrary moving of points, it is adjustment of a gross parameter which may affect views on all of the two-dimensional slices. The user can for example manipulate the control element and this is then updated in the rendering and may be adjusted such that the overall segmentation is improved.

A medical system as used herein may take different forms in different examples. In one example the medical system may be a workstation for example in a radiology or other medical center where a medical professional is examining the three-dimensional medical image data. In other examples the medical system may be a remote computing system which is used for processing bulk quantities of medical imaging data. In yet other examples the medical system may be a workstation or other computer system that is integrated with and is controlling a medical imaging system. For example, the medical system may comprise a magnetic resonance imaging system, an ultrasound system, or even a computed tomography system.
The medical system may also be configured for displaying a variable number of two-dimensional slices. In one example there may only be a single slice which is displayed and yet even with this, the segmentation can be improved by the user manipulating the control element. In other examples there may be multiple slices which are displayed.

In another embodiment the one-dimensional path is defined within the three-dimensional segmentation. This may be useful because the implementation may be fit to the existing data. In this case the one-dimensional path is then moved in a way which is meaningful for the anatomical structure depicted in the three-dimensional medical image data.

In another embodiment the three-dimensional segmentation is adjusted by calculating a vector translation of the reference location using the one-dimensional position. The three-dimensional segmentation is further adjusted by updating the three-dimensional segmentation by inputting the vector translation into a three-dimensional editing engine. This embodiment may be beneficial because software which is used for performing full three-dimensional editing of the segmentation may be used when the two-dimensional projections displayed do not represent the entire three-dimensional space represented by the three-dimensional segmentation. For example, the change in the position along the path may be useful in generating the vector translation.

In another embodiment the vector translation of the reference location is input into the three-dimensional editing engine as virtual mouse motion. In this example the input into the three-dimensional editing engine is simulated mouse motion or manipulation of the segmentation. This may further have the benefit that existing software, which is designed for performing three-dimensional editing of the segmentation, may be used when three-dimensional views are not displayed.

In another embodiment the three-dimensional segmentation is a cardiac segmentation. This embodiment may be beneficial because the heart of the subject has very well-defined reference locations that need to be optimized and fit to the heart to perform an accurate segmentation.

In another embodiment the at least one reference location comprises a left ventricular heart apex.

In another embodiment the at least one reference location comprises a right ventricular heart apex.

In another embodiment the at least one reference location comprises a ventricular apex.

In another embodiment the at least one reference location comprises a mitral valve plane.

In another embodiment the at least one reference location comprises a tricuspid plane.

In another embodiment the three-dimensional segmentation comprises a valve plane.

In another embodiment the at least one reference location comprises combinations of the above as long as they are not mutually exclusive.

In another embodiment the multiple two-dimensional slices of the three-dimensional medical image data are perpendicular to the long axis of the left ventricle. For example, the at least one reference location could be the left ventricular heart apex. In this case the segmentation can be very effectively adjusted in each of the two-dimensional slices.

In some examples, the two-dimensional slices are perpendicular (at a 90° angle) to the long axis of the left ventricle. This may be the case because after the segmentation of the heart, the three-dimensional medical image data is reformatted based on the anatomical information. In another scenario, the slices could be roughly perpendicular, because they are planes of the originally acquired slices of the three-dimensional medical image data. For example, the acquisition may be set up in a way such that the slices show short-axis cuts through the heart. In the second case, however, the alignment is done roughly, and there may be still some remaining misalignment.

In another embodiment the three-dimensional segmentation is a prostate segmentation. This embodiment may be beneficial because the prostate has a very well-defined anatomical shape. The segmentation of the prostate may then be effectively modified by the modification of at least one reference location.

In another embodiment the at least one reference location comprises a prostate base.

In another embodiment the prostate segmentation further comprises a prostate apex.

In another embodiment the prostate segmentation further comprises a prostate mid-gland plane location.

In another embodiment the prostate segmentation combines any of the above-mentioned prostate segmentation reference locations.

In another embodiment the reference location comprises a vertex.

In another embodiment the vertex is more than one vertex.

In another embodiment the reference location comprises a triangle. In some variations the reference location is multiple triangles. In another embodiment the reference location comprises an anatomical landmark.

In another embodiment the reference location comprises a plane. For example, the reference location could comprise just a single vertex or a set of vertices. Likewise, there may be just a single triangle specified or a set of triangles. Similarly, multiple anatomical landmarks and planes may also be the reference location.

In another embodiment the at least one two-dimensional slice is multiple two-dimensional slices. A plurality of the multiple two-dimensional slices are displayed simultaneously. This may be beneficial because it may provide for a more effective means of moving the at least one reference location to the proper location to optimize the segmentation.

In another embodiment the user interface is further configured for receiving a modification of the cross-section of the three-dimensional segmentation within the at least one two-dimensional slice on the display. For example, the segmentation may provide outlines or projections which are placed onto the display. The user may for example be able to drag or otherwise move or manipulate these displayed cross-sections.

Execution of the machine-executable instructions further cause the processor to receive the modification of the cross-section from the user interface. Execution of the machine-executable instructions further causes the processor to adjust the three-dimensional segmentation using the modification of the cross-section. This could for example involve updating other portions of the model or other portions of the model which are within a certain location or neighborhood of the portions that were moved.

In another embodiment execution of the machine-executable instructions further causes the processor to provide the three-dimensional segmentation by segmenting the three-dimensional medical imaging data using an image segmentation module. For example, after the processor has received the three-dimensional medical imaging data it may be input into the image segmentation module which may for example function automatically. The image segmentation module in different examples could be one of many different types. Some examples which are not limiting are an anatomical atlas-based segmentation module, a deformable shape segmentation module that optimizes a fit and has energy constraints, it may also comprise a region-based segmentation module, a threshold-based segmentation module, an edge-based segmentation and even a neural network trained to perform the segmentation.

For example, the neural network could be configured to receive the three-dimensional image data and in response output the segmentation. Systems, as described herein, may then be used to improve or modify the segmentation which was performed using one of these automated methods.

In another embodiment the medical system further comprises a medical imaging system configured for acquiring the three-dimensional medical imaging data from the imaging zone. Execution of the machine-executable instructions are further configured for controlling the medical imaging system to acquire the three-dimensional medical imaging data. This embodiment may be beneficial because it may provide for an integrated system in acquiring the medical imaging data and then providing an improved segmentation.

In another embodiment the medical imaging system is a magnetic resonance imaging system.

In another embodiment the medical imaging system is a computed tomography system.

In another embodiment the medical imaging system is an ultrasound imaging system that is configured for providing three-dimensional medical imaging data.

In another aspect the invention provides for a computer program product comprising machine-executable instructions for execution by a processor controlling a medical system. For example, the computer program product could be contained on a memory, storage device or even a non-transitory storage medium. The medical system comprises a display and a user interface. Execution of the machine-executable instructions causes the processor to receive the three-dimensional medical image data descriptive of an anatomical structure.

Execution of the machine-executable instructions further causes the processor to receive a three-dimensional segmentation of the anatomical structure. The three-dimensional segmentation comprises one or more reference locations. Execution of the machine-executable instructions further cause the processor to display at least one two-dimensional slice of the three-dimensional medical imaging data using the display. Execution of the machine-executable instructions further causes the processor to render a cross-section of the three-dimensional segmentation within the at least one two-dimensional slice on the display.

Execution of the machine-executable instructions further causes the processor to provide a control element of the user interface for the at least one reference location on the user interface. The control element is configured for receiving a one-dimensional position of the at least one reference location along a predetermined one-dimensional path. Execution of the machine-executable instructions further causes the processor to receive the one-dimensional position from the control element. Execution of the machine-executable instructions further causes the processor to adjust the three-dimensional segmentation using the one-dimensional position. Execution of the machine-executable instructions further causes the processor to update the rendering of the cross-section of the three-dimensional segmentation within the at least one two-dimensional slice on the display.

In another embodiment execution of the machine-executable instructions further cause the processor to save the three-dimensional segmentation after it has been updated.

In different examples the control element may take different forms. As the control element is used to control the position of the at least one reference location along a predetermined one-dimensional path any control element which is able to provide a one-dimensional coordinate may be used. For example, a slide or dial or numerical input may be used. In other examples one control element may be used for inputting data into more than one reference location. For example, if there are two reference locations then an XY pad or plane may be used to adjust two of them one-dimensionally in a simultaneous manner.

In another aspect the invention provides for a method of operating a medical system. The medical system comprises a display and a user interface. The method comprises receiving three-dimensional medical image data descriptive of an anatomical structure. The method further comprises receiving a three-dimensional segmentation of the anatomical structure. The three-dimensional segmentation comprises one or more reference locations. The method further comprises displaying at least one two-dimensional slice of the three-dimensional medical image data using the display. The method further comprises rendering a cross-section of the three-dimensional segmentation within the at least one two-dimensional slice on the display.

The method further comprises providing a control element of the user interface for the at least one reference location on the user interface. The control element is configured for receiving a one-dimensional position of the at least one reference location along a predetermined one-dimensional path. The method further comprises receiving the one-dimensional position from the control element. The method further comprises adjusting the three-dimensional segmentation using the one-dimensional position. The method further comprises updating the rendering of the cross-section of the three-dimensional segmentation within the at least one two-dimensional slice on the display.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, a data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the processor of a computer system to interact with and/or control an external computing device and/or apparatus. A hardware interface may allow a processor to send control signals or instructions to an external computing device and/or apparatus. A hardware interface may also enable a processor to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

Magnetic Resonance (MR) imaging data is defined herein as being the recorded measurements of radio frequency signals emitted by atomic spins using the antenna of a Magnetic resonance apparatus during a magnetic resonance imaging scan. Magnetic resonance data is an example of medical image data. A Magnetic Resonance Imaging (MRI) image or MR image is defined herein as being the reconstructed two- or three-dimensional visualization of anatomic data contained within the magnetic resonance imaging data. An MR image is an example of three-dimensional medical image data. This visualization can be performed using a computer.

### BRIEF DESCRIPTION OF THE DRAWINGS

In the following preferred embodiments of the invention will be described, by way of example only, and with reference to the drawings in which:
Fig. 1 illustrates an example of a medical system;
Fig. 2 shows a flow chart which illustrates a method of operating the medical system of Fig. 1;
Fig. 3 illustrates a further example of a medical system;
Fig. 4 shows a flow chart which illustrates a method of operating the medical system of Fig. 3;
Fig. 5 illustrates the adjustment of a three-dimensional segmentation using a control element;
Fig. 6 illustrates an implementation of multiple control element as sliders in a GUI;
Fig. 7 illustrates the one-dimensional paths corresponding to the sliders in Fig. 6; and
Fig. 8 illustrates the modification of a three-dimensional segmentation using a slider.

### DETAILED DESCRIPTION OF THE EMBODIMENTS

Like numbered elements in these figures are either equivalent elements or perform the same function. Elements which have been discussed previously will not necessarily be discussed in later figures if the function is equivalent.

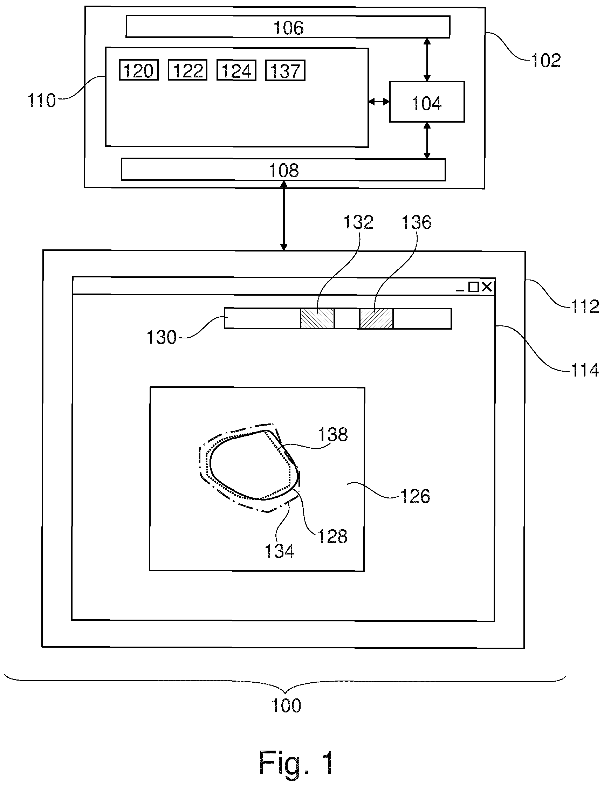

Fig. 1 illustrates an example of a medical system 100. The medical system is shown as comprising a computer 102. The computer 102 comprises a processor 104. The processor 104 is intended to represent one or more computing cores that are located at one or more locations. The processor 104 could therefore be multiple processing cores and/or chips and could be located in physically different computer systems in different locations. The processor 104 is connected to an optional hardware interface 106. If the medical system 100 comprises additional components the hardware interface 106 may be present and may be used by the processor 104 to control it. The processor 104 is also connected to a user interface 108 and a memory 110. The memory 110 is intended to represent any type of memory that is accessible by the processor 104. The user interface 108 is shown as comprising a display 112. On the display there is a graphical user interface 114.

The memory 110 is shown as containing machine-executable instructions 120. The machine-executable instructions 120 contain instructions which enable the processor 104 to perform various control, data processing and image processing tasks. The memory 110 is further shown as containing three-dimensional medical image data 122 and a segmentation 124. The segmentation 124 contains a segmentation of an anatomical structure. In the graphical user interface 114 there is a window which shows a rendering of a two-dimensional slice 126 of the three-dimensional medical image data 122. Within the slice 126 the anatomical structure 128 can be shown.

The graphical user interface 114 is also shown as containing a control element 130. In this example the control element 130 is a slider. The box 132 represents the slider in a first position. The dot-dash line 134 represents the cross-section of the three-dimensional segmentation 124. In this example the cross-section 134 does not fit the anatomical structure 128 well. The user then moves the slider into the second slider position 136. The segmentation is then updated such that the segmentation is now the dotted line 138. This is the adjusted cross-section 138 of the three-dimensional segmentation 124.

When the slider 130 is moved from the first position 132 to the second position 136 a one-dimensional position 137 is stored in the memory 110. This one-dimensional position 137 is used to update the segmentation by moving the at least one reference location along a predetermined one-dimensional path.

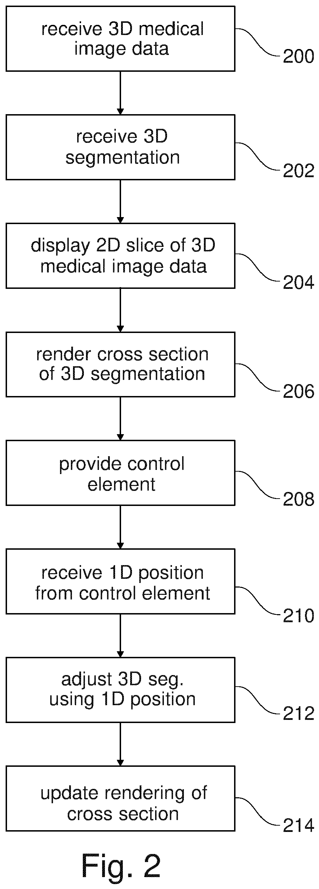

Fig. 2 shows a flowchart which illustrates a method of operating the medical system 100 of Fig. 1. First in step 200 the three-dimensional medical image data 122 which is descriptive of an anatomical structure is received. Next in step 202 the three-dimensional segmentation of the anatomical structure 124 is received. The three-dimensional segmentation comprises one or more reference locations which are not visible in the rendering of the two-dimensional slice 126. The user is therefore unable to adjust them without the slider 130. Alternatively, the user may use the slider to move a reference location out of one of the displayed two-dimensional slices 126.

Next in step 206 the cross-section of the three-dimensional segmentation 134 is rendered within the two-dimensional slice 126. Next in step 208 the control element 130 is provided on the user interface 114. In this example there is only one reference location that is provided. In other models there may be additional sliders or additional controls. The user then adjusts the slider from the first position 132 to the second position 136 and in step 216 the one-dimensional position is received from the control element 130. Next, in step 212, the three-dimensional segmentation is adjusted using this one-dimensional position. Then, in step 214, the rendering of the cross-section 138 is updated on the two-dimensional slice 126.

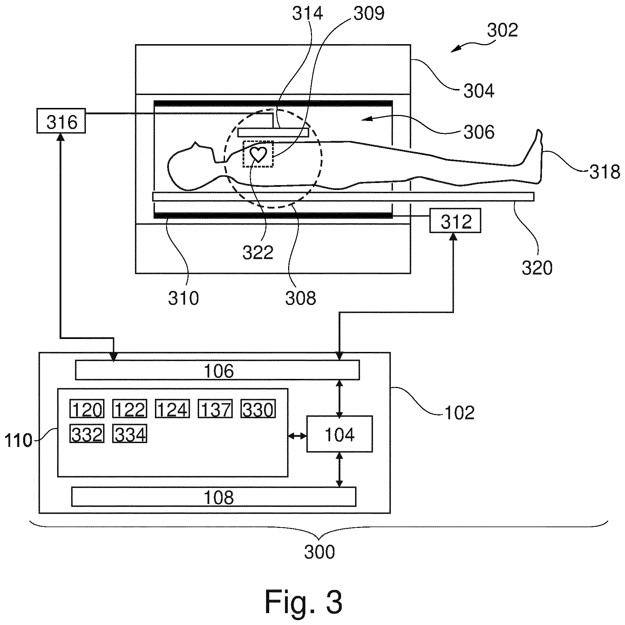

Fig. 3 illustrates a further example of a medical system 300. The medical system 300 in Fig. 3 is similar to the medical system 100 in Fig. 1 except it additionally comprises a magnetic resonance imaging system 302. The display 112 is also a part of the medical system 300 but is not shown in Fig. 3. Fig. 3 is intended to be representative. The magnetic resonance imaging system 302 may also be replaced with other types of medical imaging systems such as a computed tomography system or an ultrasound imaging system.

The magnetic resonance imaging system 302 comprises a magnet 304. The magnet 304 is a superconducting cylindrical type magnet with a bore 306 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A region of interest 309 is shown within the imaging zone 308. The magnetic resonance data that is acquired typically acquried for the region of interest. A subject 318 is shown as being supported by a subject support 320 such that at least a portion of the subject 318 is within the imaging zone 308 and the region of interest 309.

Within the region of interest 309 there is an anatomical structure 322. In this example the anatomical structure 322 of the subject 318 is the subject's heart. Other organs or structures may also be imaged such as the prostate.

Within the bore 306 of the magnet there is also a set of magnetic field gradient coils 310 which is used for acquisition of preliminary magnetic resonance data to spatially encode magnetic spins within the imaging zone 308 of the magnet 304. The magnetic field gradient coils 310 connected to a magnetic field gradient coil power supply 312. The magnetic field gradient coils 310 are intended to be representative. Typically magnetic field gradient coils 310 contain three separate sets of coils for spatially encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio-frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio-frequency coil 314 is connected to a radio frequency transceiver 316. The radio-frequency coil 314 and radio frequency transceiver 316 may be replaced by separate transmit and receive coils and a separate transmitter and receiver. It is understood that the radio-frequency coil 314 and the radio frequency transceiver 316 are representative. The radio-frequency coil 314 is intended to also represent a dedicated transmit antenna and a dedicated receive antenna. Likewise the transceiver 316 may also represent a separate transmitter and receivers. The radio-frequency coil 314 may also have multiple receive/transmit elements and the radio frequency transceiver 316 may have multiple receive/transmit channels. For example if a parallel imaging technique such as SENSE is performed, the radio-frequency could 314 will have multiple coil elements.

The transceiver 316 and the gradient controller 312 are shown as being connected to the hardware interface 106 of a computer system 102.

The memory 110 is additionally shown as containing pulse sequence commands 330. The pulse sequence commands enable the processor 104 to control the magnetic resonance imaging system to acquire magnetic resonance imaging data 332. The magnetic resonance imaging data 332 may be reconstructed by the processor into the three-dimensional medical image data 122. The memory 110 is also shown as optionally containing an image segmentation module 334. The image segmentation module 334 may be configured to take the three-dimensional medical image data 122 as input and in response output the three-dimensional segmentation 124. As mentioned earlier above, there are a variety of means which this may be accomplished by.

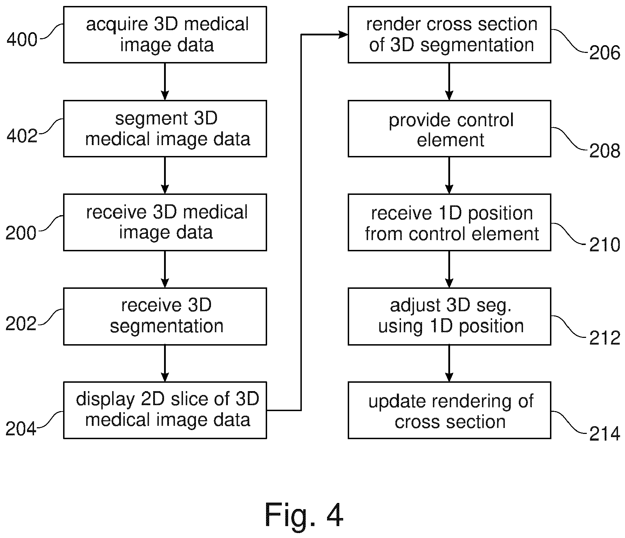

Fig. 4 shows a flowchart which illustrates a method of operating the medical system 300 of Fig. 3. The method in Fig. 4 starts with step 400. In step 400 the machine-executable instructions 120 control the medical imaging system, in this case the magnetic resonance imaging system 302, to acquire the three-dimensional medical image data 122. In this particular example the pulse sequence commands 330 are used to acquire the magnetic resonance imaging data 332 which is then reconstructed into the three-dimensional medical image data 122. Next in step 402 the three-dimensional medical image data 122 is input into the image segmentation module 334 in order to provide the three-dimensional segmentation 124. After this, the method then proceeds to step 200 of Fig. 2 and the rest of the method in Fig. 4 follows the method illustrated in Fig. 2.

Some examples may relate to interactive 3D mesh editing along a normal/out-of-plane direction of a view plane by additional GUI controls.

A possible problem for 3D editing tools in MR applications is that only slice-by-slice editing may be available in the user interface. This means that often results are only edited in-plane, for example in cardiac MR or prostate MR. In cardiac MR, when short-axis planes are shown, this does not allow for changing the height of the apex or the valve planes. As an example, the left ventricle (LV) could be segmented too short, i.e., the segmented apex position is above the actual apex slice. In that case, the mesh is not even visible in the actual apex slice. Without a displayed mesh contour, no editing would be possible that could shift the apex down to the correct location in the image.

In another example the adjustment of the three-dimensional segmentation may be split into two components. In-plane interactions with the 3D mesh may still done using the mouse. Edits along the normal direction are done by combining anatomical information from the 3D mesh and a one-dimensional slider GUI control element or other control element. The start point and direction of the editing are defined from the anatomical context of the model. For example, to move the apex, the apex position is the starting point, and the connection line between apex and mitral valve defines the direction. When the slider is being moved, the editing algorithm is fed with information as if the mouse had dragged the apex position along that direction. This way, the mesh is being updated as if the apex had been dragged upwards/downwards.
Overall, this enables to control in-plane and out-of-plane edits by a consistent editing toolkit preserving the 3D mesh.

Examples may split the interaction editing into two components. In-plane interactions with the 3D mesh may be done in some examples using the mouse. Edits with a (non-negligible) component in the normal direction may be done by combining anatomical information from the 3D mesh and a one-dimensional slider GUI or other control element. The edits do not have to be exactly along the normal direction. The start point and direction of the editing may be defined from the anatomical context of the model. For example, to move the apex, the apex position is the starting point, and the connection line between apex and mitral valve defines the direction. When the slider is being moved, the editing algorithm is fed with information as if the mouse had dragged the apex position along that direction. This way, the mesh is being updated as if the apex had been dragged upwards/downwards.

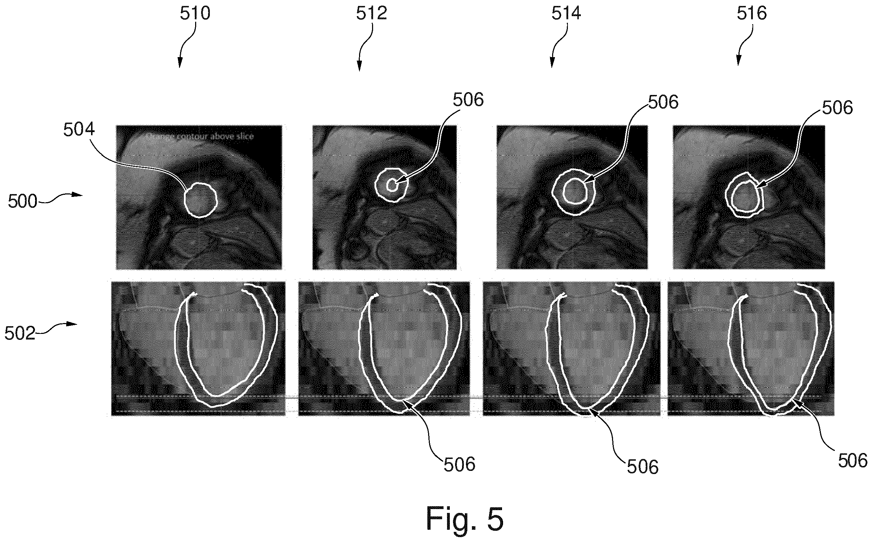

Fig. 5 illustrates a concrete example when the anatomical structure is the heart. Four images are shown. The images in the top row represent the short axis images which are rendered and displayed to the subject. These are examples of the two-dimensional slices on the user interface. The bottom images 502 are images along the long axis of the heart and are not rendered but are shown for illustrative purpose here. In the first column 510 the original segmentation cross-section 504 is displayed before correction. Column 512 shows the segmentation updated after a small slider correction; the endo apex starts moving into the slice. Column 414 shows the image segmentation 506 updated after a large slider correction that moves the endo apex contour to the desired height. Column 516 shows a further correction after manual slice edits within the plane. After that, the apex slider could be used again to adjust the latest mesh in terms of apex height.

The behavior of the control elements 130 may be modified in different examples. For example, in one case after the slider has been released and the mesh has been updated, the slider 130 is directly reset again to a central location from which a new edit can start.

In another case, the slider is kept at the target location even after releasing it such that the user can:
- inspect other anatomical locations (e.g. scroll through slices) for the correctness of the current mesh position, and
- further adjust the slider. This then modifies the previous slider editing step (i.e. with the same initial mesh as in the previous step, just with another target position along the one-dimensional axis),

In this example, the slider is reset to a center location on the next manual edit or when changing one of the potentially present other sliders. Then, on the next slider movement, the editing is performed based on the mesh that is valid at that point, also recalculating all landmarks from the mesh.

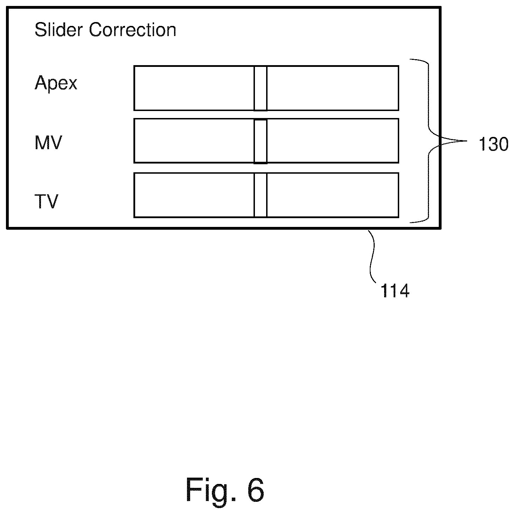

Fig. 6 illustrates an example of a portion of a graphical user interface 114. This example is again for the heart and there are three sliders which are for modifying the position of the apex, the mitral valve and the tricuspid valve TV.

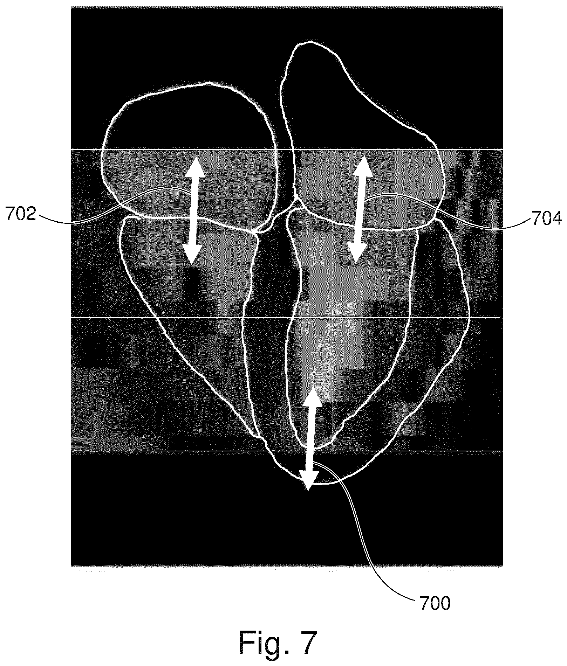

Fig. 7 illustrates change in the model along the one-dimensional path for each of the three sliders illustrated in Fig. 6. Path 700 is the path for the LV apex. Path 702 is the one-dimensional path for the tricuspid valve. And finally, path 704 is the path for the mitral valve. As each of these sliders are moved the segmentation is adjusted for this change automatically and the rendering will be updated.

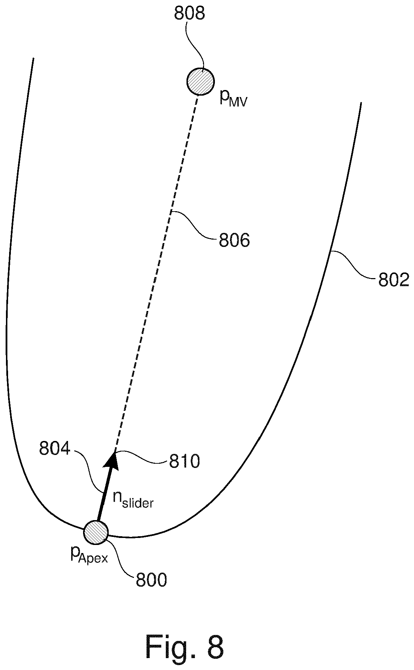

Figs. 7 and 8: Left illustrate an example slider controls in GUI. The user clicks the slider, moves it, and the result is that structures in the mesh are being moved. Fig. 8 shows example structures that benefit from slider editing (LV apex 700, valve planes 702, 704). The motion is shown in a long-axis view here. If no long-axis view is available at all, or no editing is available in a long-axis view, the sliders enable editing along those directions.

Examples may comprise one or more of the following components:
- Display unit: displays a cardiac MR image together with an overlay of the segmentation result (i.e. the segmented 3D mesh). An example display is shown in Fig. 6, where MR images are shown. Typically, only short-axis images are shown (top row).
- Interactive 3D editing unit: Allows to interact with the 3D mesh by clicking and dragging directly on the display image/mesh. Typical usage:
   - User looks at image with overlaid segmentation result and identifies a region to edit.
   - User clicks into the center of the region to edit and holds down the mouse button.
   - User drags the mouse to the desired location, while the displayed mesh is being dynamically deformed, i.e., a region around the start point is shifted towards the new mouse position. The mesh is deformed in 3D space.
   - The user releases the mouse button at the desired location.
   - The deformed mesh is displayed and used for further analysis such as volume calculation.
   - As can be seen from the description, the mesh can be edited in directions that correspond to mouse movements in the displayed plane. If only a short axis cut-plane is shown, the LV wall can, for example, be moved in and out, but not up and down.
- Slider editing unit: Allows to modify the mesh along directions which are not enabled by shown short-axis cut-planes. This comprises:
   - Controls in the graphical user interface that correspond to anatomically defined mesh corrections. Typically, this can be slider controls, see Figure 6 and 7. Preferred applications for cardiac MR segmentation editing:
      - Move LV apex up and down
      - Move mitral valve plane up and down
      - Move tricuspid valve plane up and down
   - An anatomical unit that translates interactions with the slider control into virtual mouse movements. These virtual mouse movements are understood by the 3D editing engine, but cannot be performed directly by the user due to the missing view planes.
      - From the anatomical context of the segmentation model, the position of the apex **p**ₐₚₑₓ and the mitral valve **p**_{MV} are determined.
      - The direction of the correction (virtual mouse motion) **n**_{slider} is calculated as normalized difference vector
      - The interactive editing is initialized as if the user had clicked on **p**ₐₚₑₓ
      - The user then adjusts the slider value **d**_{slider} which determines the length of the editing for the apex (virtual mouse movement). From this, a target mouse point is calculated as **p**_{current} = **p**ₐₚₑₓ + **d**_{slider} ^{∗} **n**_{slider}. This point **p**_{current} is then fed into the 3D editing engine as if the user had moved the mouse there.
      - Note: In practice, the direction of **n**_{slider} can be inverted, such that positive slider values make the ventricle longer.

In some examples only slices that are parallel (or roughly parallel) are displayed. For example, a long axis view (or other view) may be presented, but editing may still only be possible in the other views (i.e. in the short-axis views). Therefore, the general absence of a particular view itself is not a requirement for examples to become effective.

Fig. 8 illustrates the slider editing concept. The point 800 represents the location of the vertex of the left ventricle. The line 802 represents the segmentation. The point 808 represents a position within the plane of the mitral valve 808. The dashed line 806 is a one-dimensional path defined between the points 800 and 808. The one-dimensional path 806 is then defined by the segmentation 808. As the slider moves a one-dimensional position 810 is defined along the path 806. This can be changed into a vector translation 804 which can be used for modifying the segmentation 802.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### LIST OF REFERENCE NUMERALS

- 100: medical system
- 102: computer
- 104: processor
- 106: hardware interface
- 108: user interface
- 110: memory
- 112: display
- 114: graphical user interface
- 120: machine executable instructions
- 122: three-dimensional medical image data
- 124: three-dimensional segmentation
- 126: rendering of two-dimensional slice
- 128: anatomical structure
- 130: control element (slider)
- 132: first slider position
- 134: cross section of three-dimensional segmentation
- 136: second slider position
- 137: one dimensional position
- 138: adjusted cross section of three-dimensional segmentation
- 200: receive three-dimensional medical image data descriptive of an anatomical structure
- 202: receive a three-dimensional segmentation of the anatomical structure, wherein the three-dimensional segmentation comprises one or more reference locations;
- 204: display at least one two-dimensional slice of the three-dimensional medical image data using the display
- 206: render a cross section of the three-dimensional segmentation within the at least one two-dimensional slice on the display
- 208: provide a control element of the user interface for the at least one reference location on the user interface
- 210: receive the one-dimensional position from the control element
- 212: adjust the three-dimensional segmentation using the one-dimensional position
- 214: update the rendering of the cross section of the three-dimensional segmentation within the at least one two-dimensional slice on the display
- 300: medical instrumnet
- 302: magnetic resonance imaging system
- 304: magnet
- 306: bore of magnet
- 308: imaging zone
- 309: region of interest
- 310: magnetic field gradient coils
- 312: magnetic field gradient coil power supply
- 314: radio-frequency coil
- 316: transceiver
- 318: subject
- 320: subject support
- 322: anatomica structure
- 330: pulse sequence commands
- 332: magnetic resonance imaging data
- 334: image segmentation module
- 400: controlling the medical imaging system to acquire the three-dimensional medical image data
- 402: segmenting the three-dimensional medical imaging data using an image segmentation module
- 500: short axis images rendered (two-dimensional slices)
- 502: long axis images not not rendered
- 504: original segmentation cross secton
- 506: adjusted segmentation cross section
- 510: before slider correction
- 512: after small slider correcton
- 514: after large slider correction
- 516: after manual mouse edits in plane
- 700: path for vertex
- 702: path for tricuspid valve
- 704: path for mitral valve
- 800: location of vertex
- 802: segmentation
- 804: vector translation
- 806: one dimensional path
- 808: location of mitral valve
- 810: one dimensional location

## Claims

1. A medical system (100, 300) comprising:
- a display (112);
- a user interface (114);
- a memory (110) containing machine executable instructions (120), and
- a processor (104) for controlling the medical system, wherein execution of the machine executable instructions causes the processor to:
- receive (200) three-dimensional medical image data (122) descriptive of an anatomical structure (128, 322);
- receive (202) a three-dimensional segmentation (124) of the anatomical structure, wherein the three-dimensional segmentation comprises one or more reference locations (800);
- display (204) at least one two-dimensional slice (126) of the three-dimensional medical image data using the display;
- render (206) a cross section (134) of the three-dimensional segmentation within the at least one two-dimensional slice on the display;
- provide (208) a control element (130) of the user interface for the at least one reference location on the user interface, wherein the control element is configured for receiving a one-dimensional position of the at least one reference location along a predetermined one-dimensional path (806);
- receive (210) the one-dimensional position (137) from the control element;
- adjust (212) the three-dimensional segmentation (124) using the one-dimensional position; and
- update (214) the rendering of the cross section of the three-dimensional segmentation within the at least one two-dimensional slice on the display.

2. The medical system of any one of the preceding claims, wherein the one-dimensional path is defined within the three-dimensional segmentation.

3. The medical system of claim 1 or 2, wherein the three-dimensional segmentation is adjusted by:
- calculating a vector translation (804) of the reference location using the one-dimensional position; and
- updating the three-dimensional segmentation by inputting the vector translation into a three-dimensional editing engine.

4. The medical system of claim 3, wherein the vector translation of the reference location is input into the three-dimensional editing engine as virtual mouse motion.

5. The medical system of any one of the preceding claims, wherein the three-dimensional segmentation is a cardiac segmentation, wherein the at least one reference location comprises any one of the following: a left ventricular heart apex, a right ventricular heart apex, a ventricular apex, a mitral valve plane, a tricuspid plane, a valve plane, and combinations thereof.

6. The medical system of any one of claims 1 through 4, wherein the three-dimensional segmentation is a prostate segmentation, wherein the at least one reference location comprises any one of the following: a prostate base, a prostate apex, a prostate mid-gland plane location, and combinations thereof.

7. The medical system of any one of claims 1 through 4, wherein the at least one reference location comprises any one of the following: a vertex, a triangle, an anatomical landmark, a plane, and combinations thereof.

8. The medical system of any one of the preceding claims, wherein the at least one two-dimensional slice is multiple two-dimensional slices, wherein a plurality of the multiple two-dimensional slices on the display are displayed simultaneously.

9. The medical system of any one of the preceding claims, wherein the user interface is further configured for receiving a modification of the cross section of the three-dimensional segmentation within the at least one two-dimensional slice on the display, wherein execution of the machine executable instructions further causes the processor to:
- receive the modification of the cross section from the user interface;
- adjust the three-dimensional segmentation using the modification of the cross section; and
- update the rendering (516) of the cross section of the three-dimensional segmentation within each of the multiple two-dimensional slices on the display.

10. The medical system of any one of the preceding claims, wherein execution of the machine executable instructions further causes the processor to provide the three-dimensional segmentation by segmenting (402) the three-dimensional medical imaging data using an image segmentation module.

11. The medical system of any one of the preceding claims, wherein the medical system further comprises a medical imaging system (302) configured for acquiring the three-dimensional medical imaging data from an imaging zone, wherein execution of the machine executable instructions are further configured for controlling the medical imaging system to acquire the three-dimensional medical image data.

12. The medical system of claim 11, wherein the medical imaging system is any one of the following: a magnetic resonance imaging system, a computed tomography system, and an ultrasound imaging system.

13. A computer program product comprising machine executable instructions (120) for execution by a processor (104) controlling a medical system (100, 300), wherein the medical system comprises a display (112) and a user interface (114),
wherein execution of the machine executable instructions causes the processor to:
- receive (200) three-dimensional medical image data (122) descriptive of an anatomical structure;
- receive (202) a three-dimensional segmentation (124) of the anatomical structure, wherein the three-dimensional segmentation comprises one or more reference locations;
- display (204) at least one two-dimensional slice (126) of the three-dimensional medical image data using the display;
- render (206) a cross section (134) of the three-dimensional segmentation within the at least one two-dimensional slice on the display;
- provide (208) a control element (130) of the user interface for the at least one reference location on the user interface, wherein the control element is configured for receiving a one-dimensional position of the at least one reference location along a predetermined one-dimensional path (806);
- receive (210) the one-dimensional position (137) from the control element;
- adjust (212) the three-dimensional segmentation (124) using the one-dimensional position; and
- update (214) the rendering of the cross section of the three-dimensional segmentation within the at least one two-dimensional slice on the display.

14. A method of operating a medical system (100, 300), wherein the medical system comprises a display (112) and a user interface (114), wherein the method comprises:
- receiving (200) three-dimensional medical image data (122) descriptive of an anatomical structure;
- receiving (202) a three-dimensional segmentation (124) of the anatomical structure, wherein the three-dimensional segmentation comprises one or more reference locations;
- displaying (204) at least one two-dimensional slice (126) of the three-dimensional medical image data using the display;
- rendering (206) a cross section (134) of the three-dimensional segmentation within the at least one two-dimensional slice on the display;
- providing (208) a control element (130) of the user interface for the at least one reference location on the user interface, wherein the control element is configured for receiving a one-dimensional position of the at least one reference location along a predetermined one-dimensional path (806);
- receiving (210) the one-dimensional position (137) from the control element;
- adjust (212) the three-dimensional segmentation (124) using the one-dimensional position; and
- updating (214) the rendering of the cross section of the three-dimensional segmentation within the at least one two-dimensional slice on the display.
